Europäisches Patentamt

European Patent Office

Office européen des brevets

(19)

(11) Veröffentlichungsnummer: **0 110 361**
**A2**

# (12) EUROPÄISCHE PATENTANMELDUNG

(21) Anmeldenummer: 83111874.0

(22) Anmeldetag: 26.11.83

(51) Int. Cl.³: **B 09 B 3/00**

(30) Priorität: 01.12.82 DE 3244419

(43) Veröffentlichungstag der Anmeldung: 13.06.84
Patentblatt 84/24

(84) Benannte Vertragsstaaten: **BE DE FR GB IT LU NL**

(71) Anmelder: **Bergwerksverband GmbH,
Franz-Fischer-Weg 61, D-4300 Essen 13 (DE)**

(72) Erfinder: **Schwenso, Klaus, Bühlowstrasse 26,
D-4330 Mülheim (DE)**
Erfinder: **Köhling, Dr., Lohbusch 1, D-4630 Bochum (DE)**
Erfinder: **Hoffmann, Erich, Barbarastrasse 42,
D-4330 Mülheim (DE)**
Erfinder: **Schieder, Theodor, Potthossboerde 22,
D-4300 Essen 1 (DE)**
Erfinder: **Petry, Rolf, Dr., Bernhardstrasse 2,
D-4100 Duisburg/Rheinhausen (DE)**
Erfinder: **Ackermann, Manfred, Heidestrasse 49,
D-4630 Bochum (DE)**

(74) Vertreter: **Schulte, Jörg , Dipl.-Ing., Hauptstrasse 2,
D-4300 Essen-Kettwig (DE)**

(54) **Verfahren und Meiler zur Herstellung von keramisierten Bergen.**

(57) Zur Herstellung eines Bau- und Bauzuschlagstoffes aus insbesondere Bergematerial des Steinkohlenbergbaus dient ein Verfahren, bei dem das Bergematerial zunächst vergleichmäßigt, dann in einer vorherbestimmten genau definierte Menge zu einem Meiler geformt, mit einer Abdeckung versehen und dann bei vorzugsweise 950°C gebrannt wird. In dem Meiler sind Kanäle oder ein ganzes Stützgerüst von Kanälen vorgesehen. Über diese Kanäle wird der Meiler mit dem notwendigen Brennstoff, vor allem aber mit Luft versorgt. Später kann der Meiler auch durch Einleiten von Wasser durch diese Kanäle gelöscht werden. Die Abdeckung besteht aus einem Gemisch aus erdfeuchten Fein- bzw. Feinstbergen mit Kalksteinmehl ö.ä., den Austritt schwefelhaltiger Gase unterbindenden Materialien oder aus einer den Meiler teilweise oder ganz abdeckenden Blechkonstruktion, die kühlbar ausgebildet ist.

0110361

Bergwerksverband GmbH
Franz-Fischer-Weg 61
43oo Essen 13

Verfahren und Meiler zur Herstellung von keramisierten
Bergen

Die Erfindung betrifft ein Verfahren zur Herstellung eines
Bau- und Bauzuschlagstoffes für den Hoch- und Tiefbau,
insbesondere aus Bergematerial des Steinkohlenbergbaus,
das zu einem Meiler aufgeschüttet und über einen gesondert
erzeugten oder beim Aufschütten belassenen Kanal gezündet,
belüftet, befeuert und bei 5oo bis 2ooo$^{0}$ C gebrannt wird.
Die Erfindung betrifft außerdem einen Meiler mit über den
Querschnitt verteilt angeordneten Kanälen für die Brennstoff- und Verbrennungsluftzufuhr und mit dem Brenner zur
Durchführung des Verfahrens.

Derartige Verfahren sind ursprünglich zum Verkoken von
Kohle entwickelt und eingesetzt worden. Sie sind in vielfältigen Ausführungsformen bekannt. Die Meilertechnik zum
Verkoken von Kohle beruht ihrerseits wieder auf der Meilertechnik, mit deren Hilfe früher Holzkohle hergestellt wurde.

Bekannt ist außerdem die Meilertechnik für die Herstellung von Baustoffen für den Straßen-, Wege- und insbesondere Sportstättenbau (DE-OS 19 34 922.5). Bei diesem bekannten Verfahren wird ein Hügel, d.h. ein Meiler künstlich aufgeschüttet und dann von außen her angezündet, indem ein Loch eingebracht oder beim Aufschütten belassen wird, durch das dann der mittig angeordnete Brenner sowohl mit Brennstoff wie auch mit Verbrennungsluft versorgt wird. Das Bergematerial wird bei diesem bekannten Verfahren bei 5oo bis 2ooo$^{\text{o}}$ C gebrannt, wobei ggf. zur Verhinderung bzw. zur Verminderung von Rauchgasemissionen der Meiler kontinuierlich befeuchtet wird. Das so gebrannte Material wird dann durch Klassierung und ggf. Zerkleinerung zu einem entsprechenden Baustoff aufgearbeitet.

Das aus der DE-OS 19 34 922.5 bekannte Verfahren hat sich nicht durchsetzen können, weil damit die bestehenden Umweltprobleme nicht zu lösen, insbesondere $SO_2$-Emissionen nicht zu verhindern sind und weil das Endprodukt eine nicht oder nur sehr ungenau vorherbestimmbare Beschaffenheit aufweist. Der einmal in Gang gesetzte Brennprozeß kann nämlich nach dem bekannten Verfahren nicht beeinflußt oder gar gesteuert werden.

Der Erfindung liegt die Aufgabe zugrunde, einen definierten Baustoff herzustellen, den Brennstoff kontrollierbar und umweltfreundlich zu gestalten sowie einen dafür geeigneten Meiler zu schaffen.

Die Aufgabe wird gemäß der Erfindung dadurch gelöst, daß das Bergematerial vergleichmäßigt, in definierter Menge zu einem Meiler geformt, mit einer den Austritt schwefelhaltiger Gase unterbindenden Abdeckung versehen und bei

9oo bis 11oo, vorzugsweise 950$^o$ C gebrannt wird.

Mit Hilfe eines derartigen Verfahrens wird ein Baustoff erzeugt, der sich vorzüglich für den Einsatz im Hoch- und Tiefbau, insbesondere als Ersatz für natürliche Zuschlagstoffe eignet. Ein derartiger Baustoff weist eine annähernd gleichmäßige Zusammensetzung und damit Beschaffenheit auf, was dadurch erreicht wird, daß das Bergematerial vor der Verarbeitung nach üblichen Methoden zunächst vergleichmäßigt wird. Da während des Brennprozesses die schwefelhaltigen Gase entweder abgeleitet und entschwefelt oder aber beim Austreten direkt unschädlich gemacht werden, ist eine umweltfreundliche Handhabung des erfindungsgemäßen Verfahrens gesichert. Es hat sich herausgestellt, daß bei Temperaturen von 9oo bis 11oo$^o$ C ein vorteilhaft gleichmäßiges Material erzeugt wird, das die gewünschten Eigenschaften aufweist, wobei ein besonders gleichmäßiges Gut zu erhalten ist, wenn, wie erfindungsgemäß vorgesehen, die Temperaturen von 9oo bis 11oo$^o$ C nach Durchbrennen des Meilergutes bis an die Abdeckung für drei bis sechs Stunden eingehalten wird.

Nach einer Ausbildung der Erfindung ist vorgesehen, daß das Bergematerial klassiert und der Siebdurchgang von o bis 55 (6o mm) nach einer Mischlagermethode zu einem Meiler geformt und gebrannt wird. Allein schon durch eine entsprechende Klassierung und insbesondere durch die anschließende Anwendung der Mischlagermethode wird ein vorteilhaft gleichmäßiges Gemisch erzeugt, so daß die vorgenannten Vorgaben sicher einzuhalten sind.

Ein quasi-kontinuierlicher Betrieb zur Herstellung keramisierter Baustoffe ist gegeben, wenn, wie erfindungsgemäß vorgeschlagen, während ein Meiler gebrannt wird, ein zweiter ausgebrannter aufgearbeitet und ein dritter neu aufgeschüttet wird.

Das gebrannte Bergematerial wird ggf. nach Zwischenlagerung für unterschiedliche Einsatzzwecke aufbereitet. Dabei ist es von Vorteil, das gebrannte Bergematerial sowohl zu klassieren als auch zu sortieren. Das Klassieren ist bekannt, wobei zusätzlich durch ein Sortieren eine Aufteilung in schweres und dichtes Material bzw. leichtes und poröses Material möglich ist. Beide Materialien sind für unterschiedliche Zwecke vorteilhaft zu verwenden, so daß die Einsatzpalette des keramisierten Materials durch eine entsprechende Behandlung zusätzlich vergrößert wird.

Der Aufbau eines Meilers geschieht zweckmäßig in der Form, daß über einen einachsig verlegten Schienenrost das Bergematerial bei möglichst gleichmäßiger Verteilung kegelförmig mit etwa 4o bis 65$^o$ Seitenneigung aufgeschüttet wird. Zur weiteren Vergleichmäßigung und damit Optimierung des Endproduktes ist es dabei vorgesehen, daß das Bergematerial in definierter Menge und bezüglich Heizwert, Schwefelgehalt, Korngrößenverteilung und Brennverhalten definierter Qualität, insbesondere mit einem Heizwert von 65o bis 12oo kcal, vorzugsweise 8oo kcal vorbereitet und zu einem Meiler geformt und gebrannt wird. Damit wird ein stoffspezifischer Meiler vorgegeben, der ein Endprodukt erbringt, das für weitere Verwendungen optimale Eigenschaften besitzt. Die dabei für die Vorbereitung des Bergematerials aufgewendeten Kosten werden durch die höheren Verkauferlöse des gleichmäßigeren und damit besseren Produktes aufgefangen.

Ein einfaches, kostengünstiges und umweltfreundliches Verfahren bezüglich der $SO_2$-Emissionen ist erfindungsgemäß darin zu sehen, daß als Abdeckung ein Gemisch aus erdfeuchten Fein- bzw. Feinstwaschbergen und (ungebranntem) Kalksteinmehl auf den Meiler in einer Schichtstärke von 2o bis 3o cm aufgebracht wird, wobei das stöchiometrische Verhältnis gleich oder größer dem einzubindenden Schwefel ist. Mit dieser Abdeckung wird vorteilhaft zweierlei erreicht. Einmal wird mit Hilfe des eingebrachten feinkörnigen $CaO/CaCO_3$ eine Entschwefelung der entweichenden Rauchgase erreicht und außerdem über die Dichtigkeit der Abdeckung der kontrollierte Abbrand des Meilers sichergestellt und ein Durchbrand der Meilerabdeckung vermieden. Bei der Abdeckung des Meilers mit einem Gemisch aus fein- bzw. feinstkörnigem Material, ggf. auch Kalksteinmehl und keramisierten Bergen sowie Einbindungshilfen muß der Meiler nach dem Brennen von dieser Abdeckung befreit werden, sofern nicht bei inerter Abdeckung die Ansprüche an das Produkt die Mitverwendung der Meilerschale gestatten. Durch den Brennprozeß tritt im Meiler eine Volumenänderung ein. Das keramisierte Material verringert sein Volumen so weit, daß zwischen der Abdeckung und dem durchgebrannten Meilerkern ein Hohlraum entsteht. An der Innenseite der Abdeckungsschale schlägt sich das Rauchgas teilweise nieder und bildet dort Ablagerungen von Salzen und Schwefelverbindungen. Wenn die Abdeckung aus Anschüttungen besteht, erleichtert die Hohlraumbildung das Aushalten der Schale vom Meilerkern sowie die Aushaltung der Salze- und Schwefeloxide. Besonders bei nichtgeschütteten Flankenabdeckungen des Meilers ist eine Aushaltung der auskristallisierten Salze und Schwefelverbindungen sowie die Entfernung der Flankenverkleidungen problemlos möglich.

Um auch hohe Schwefelanteile vollständig einzubinden, ist erfindungsgemäß vorgesehen, daß der Abdeckmasse zur Unterstützung der Schwefeleinbindung durch Kalksteinmehl ein Reagenz wie Lux-Masse oder auch Aktivkohle zugegeben wird. Die mit Schwefel angereicherte Meilerschale soll nicht verworfen, sondern hereingewonnen und anderweitig z.B. zur Schwefelsäuregewinnung verwendet werden.

Als wichtig hat sich herausgestellt, daß die aufgeschichteten Berge gleichmäßig von unten her belüftet werden. Dies wird erfindungsgemäß dadurch erreicht, daß der Meiler auf einer Schicht von grobkörnigem, nicht brennbarem Material errichtet wird. Hierdurch verteilt sich die notwendige Verbrennungsluft gleichmäßig über die gesamte Grundfläche, so daß ein gleichmäßiger Durchbrand zu erreichen ist, auch dann, wenn innerhalb des Meilers ein nicht durchweg gleichmäßiger Materialaufbau erreicht worden ist.

Weiter dient der gleichmäßigen Belüftung die erfindungsgemäße Ausbildung, nach der mittig des Meilers mit diesem gleichzeitig ein mit grobkörnigem, nicht brennbarem Material ausgefüllter Gaskanal durch Mithochziehen eines bodenlosen Fasses oder eines Rohres gebildet wird. Über diesen Gaskanal wird das freigesetzte Gas, in der Regel schwefelhaltiges Gas, gezielt abgeführt und an die Schale bzw. die Spitze des Meilers herangeführt. Hier kann nun durch entsprechende Maßnahmen, beispielsweise durch Ausbildung eines Pfropfens aus fein- bis feinstkörnigem Kalkstein ein Einbinden des Schwefels erreicht werden, ohne daß dadurch der Zug des Meilers beeinflußt wird. Andererseits kann aber durch gezielte Ausbildung des den Schwefel einbindenden Materials der Zug des Meilers durchaus beeinflußt werden, wenn dies aus irgendwelchen Gründen sich als notwendig erweisen sollte.

Der Zündvorgang wird verbessert und gleichzeitig ein gleichmäßiges Anbrennen des Meilers gesichert, indem der Zündstoff, vorzugsweise grobstückiger Koks am Fuß des Gaskanals angeschüttet wird. Dieser Koks dient als Startenergie und sichert ein gleichmäßiges Durchbrennen des Meilers, da er gezielt über die Grundfläche des Meilers verteilt werden kann, so daß der Meiler gleichzeitig an mehreren Stellen anbrennt und dann auch gleichmäßig durchbrennt.

Zur Durchführung des Verfahrens dient ein Meiler mit über den Querschnitt verteilt angeordneten Kanälen für die Brennstoff- und Verbrennungsluftzufuhr und mit dem Brenner. Hierbei wird der gewünschte, gezielte Brand dadurch erreicht, daß der Meiler mit einer den Schwefel zurückhaltenden oder einbindenden Abdeckung versehen ist und die Kanäle von der senkrechten Achse des Meilers und der Meilergrundfläche mit einer Steigung von 5 bis 15 %, vorzugsweise 1o % verlegt und durch die Abdeckung hindurchgeführt sind. Die Kanäle weisen endseitige Abdeckungen oder Ventile auf, über die sowohl die Brennstoff- wie auch die Verbrennungsluftzufuhr gesteuert werden kann. Außerdem können die Kanäle beim Löschen des Meilers als Flutkanäle genutzt werden.

Ein gleichmäßiger Brand über die Höhe und den Durchmesser des Meilers ist gemäß der Erfindung dadurch gesichert, daß die mit regelbarem Verschluß ausgebildeten Kanäle in mehreren Ebenen verlaufend angeordnet sind. Da die Kanäle jeweils endseitig über die schon erwähnten Ventile verfügen, kann der Brand in seinem Verlauf genau gesteuert werden, wobei über Fernthermometer der Temperaturverlauf innerhalb des Meilers zu überwachen ist.

Zur Steuerung des Brennprozesses durch Temperaturableitung (Unterschreitung der Zündtemperatur) ist erfindungsgemäß ein System von Rohren oder Rohrschlangen vorgesehen, in dem ein wärmeableitendes Medium pumpengesteuert zirkuliert und partiell, oder nach Abschluß des Prozesses total, den Meiler bzw. den Meilerinhalt kühlt. Durch das Abführen von Wärme, die anderweitig genutzt werden kann, ist der Verbrennungsvorgang gezielt zu beeinflussen.

Das Kühlsystem erfüllt in vorteilhafter Weise den zusätzlichen Zweck, die oben erwähnten Versorgungskanäle in den Ebenen abzustützen. Dabei ist die vorteilhafte Ausbildung

0110361

- 8 -

vorgesehen, nach der die einzelnen Kanäle und Rohre bzw. Rohrschlangen vor dem Aufschichten des Meilers zusammengefügt und dann anschließend mit dem Bergematerial überschüttet werden. Beim Abtragen des durchgebrannten Meilers werden die Kanäle entsprechend wieder aufgedeckt und demontiert. Vorgesehen ist ebenfalls, daß das gebrannte Gut das System besonders bei kontinuierlichem Ablauf des Meilerprozesses nach unten durch das festmontierte Rohrsystem durchfallend verläßt.

Zur Vermeidung des Abschälaufwandes und zur weiteren Beschleunigung des Verfahrens und gezielten Meilerbetriebes ist es von Vorteil, wenn, wie erfindungsgemäß vorgeschlagen, die Flanken über eine kühlbare, die Spitze des Meilers freilassende Blechkonstruktion begrenzt und abgestützt sind. Bei einer derartigen Abdeckung ist nicht nur das unkontrollierte Austreten von Schwefeloxiden auf einfache Weise unterbunden, es kann auch, wie bereits oben dargestellt, das Sublimat auf einfache Weise ausgehalten werden. Darüberhinaus kann mittels der wassergekühlten Blechkonstruktion in vorteihafter Weise ein Teil der beim Brennprozeß entstehenden Abwärme zurückgewonnen werden. Zweckmäßig dient als Einkleidungskonstruktion ein sich nach oben kegel- oder bienenkorbartig verjüngender bzw. verschmälernder Stahlblechmantel. Durch den Stahlblechmantel, der punktweise über die Abstützungen gesichert ist, kann das Kühlmedium mit dem erforderlichen Mengenstrom von oben nach unten geführt werden.

Der wassergekühlte Stahlblechmantel kann auch rohrförmig ausgebildet sein. Dabei ist die Standfläche offen und am oberen Ende befindet sich ein nach oben enger werdender Stahlblechkegel. Ein derartiger Walzenmeiler wird durch die obere Öffnung gefüllt. Nach dem Tempern wird das Rohr mittels Hebezeug gezogen und so die aufwendige Abschälung des Mantelmaterials vermieden.

Um den Betrieb kontinuierlicher zu gestalten, ist es von Vorteil, mehrere Meiler dicht an dicht zu einem Damm zusammenzufügen und über gemeinsame Kanäle seriell zu beschicken. Dabei ist so vorzugehen, daß ein Meiler aufgefahren, der nächste gezündet, der dritte getempert und der vierte abgetragen wird. Der Vorteil des Gruppenbetriebes ist darin zu sehen, daß die notwendigen Ver- und Entsorgungsaggregate sowie die erforderlichen maschinellen Hilfsmittel kurze Wege und geringe Stillstandzeiten haben.

Nach einer weiteren Ausführungsform der Erfindung sind mehrere Meiler in Form eines Ringdammes zusammengefügt. Hierbei können die notwendigen Ver- und Entsorgungsaggregate sowie die Maschinen kreisförmig verlaufend arbeiten, wobei die einzelnen Arbeitsschritte jeweils in den einzelnen Meilerabschnitten nacheinander durchgeführt werden. Der kontinuierliche Betrieb verbessert die Wirtschaftlichkeit der Anlage durch geringste Stillstandzeiten der Hilfs- und Versorgungsmittel. Die Abdeckung von Ringmeilern erfolgt zweckmäßigerweise durch die Verkleidung mit wassergekühlten Stahlblechtafeln, die um ihre Fußpunkte klappbar ausgebildet sind. Das Freilegen der Meilerdammabschnitte durch Abklappen der Flankenverkleidung erleichtert sowohl die Aufarbeitung des durchgebrannten Produktes als auch das Auffahren des neuen Meilergutes.

Für das Anfahren eines Meilers ist neben der Verwendung von Öl- und Gasbrennern auch eine fremdgezündete Koksschicht empfehlenswert, die zweckmäßigerweise zwischen den Profilen eines Schienenrostes eingebracht wird. Die Koksschicht schließt dann mit Schienenoberkante ab. Eine solche Anordnung hat den Vorteil, daß nicht nur eine gleichmäßige Schichtstärke des zum Anfahren erforderlichen Brennmaterials erreicht wird, sondern auch nach dem Durchbrand beim Gewinnen des Meilergutes zuverlässig die Vermischung mit Fremmaterialien verhindert wird.

Aufgrund der besonderen Ausbildung des Meilers treten die Rauchgase gezielt im oberen Bereich, d.h. in der Spitze des Meilers aus. Zur Verhinderung schädlicher Emissionen wird erfindungsgemäß die Spitze des Meilers kappenartig aus einem Material mit größerer Permeabilität ausgebildet (beispielsweise aus Kalksteinsand oder Kalksteingries) als das übrige Abdeckmaterial des Meilers. Hierdurch wird eine Kegelspitze oder ein Dammgrat gebildet, um den austretenden Gasen zielgerichtet einen Austritt genau in dem vorgegebenen Bereich zu ermöglichen, der durch die Ansammlung von Kalksteinsand oder Kalksteingries in diesem Bereich eine sichere Abscheidung des in den Gasen mitgeführten Schwefels sichert. Durch Zugabe eines Reagenz kann auch hier gezielt das Einbinden des Schwefels verbessert werden. Dadurch, daß ein bewußter Schwachpunkt in der Abdeckung des Meilers vorgegeben ist, wird zugleich eine Entlastung der Abdeckung im übrigen Bereich herbeigeführt.

Unter bestimmten Voraussetzungen kann es vorteilhaft sein, wenn von der Spitze des Meilers bis zum Boden ein senkrechter, mit Kalksteinsand oder Kalksteingries gefüllter Abgasbereich ausgebildet wird. Dabei kann der Bereich zur Meilerbasis hin schmaler werden. Andererseits ist es wegen der leichteren Ausbildung zweckmäßig, daß beim Aufschütten des Meilers mittig ein Rohr angeordnet wird, das mit Kalksteinsand oder Kalksteingries Schicht um Schicht gefüllt und mit dem Wachsen des Meilers nach oben gezogen wird. Zusätzlich zum Kalksteinsand und/oder -gries kann Aktivkohle zugemischt sein.

Um sicher jede Emission zu verhindern, ist es nach einer weiteren Ausbildung der Erfindung vorgesehen, das Meilergut mit einer flexiblen, mit Teflon beschichteten Folie in Zeltform abzudecken, wobei die Folie unmittelbar auf dem Meilergut aufliegt. Dabei wird an der Zeltspitze der Folienmantel an eine Absauganlage angeschlossen, die die entstehenden Rauchgase einer Rauchgasreinigung zuführt. Diese Abdeckungsart kann auch auf den Ringmeiler übertragen werden, in der Form, daß die Absauganlage abschnittsweise an den Dammgrat angeschlossen wird. Eine weitere Methode der Emissionsverhinderung besteht erfindungsgemäß darin, daß Einzelmeiler, Gruppenmeiler oder Ringmeiler unter einem den gesamten Arbeitsbereich überspannenden, rauchgasdichten Hallen- oder Zeltdach betrieben werden. Der Vorteil ist darin zu sehen, daß nicht nur die Emissionsgase zuverlässig abgeleitet werden können, sondern daß auch beim Aufarbeiten des Brennproduktes störende Staubentwicklungen von der Umwelt ferngehalten werden. Ob eine derartige zusätzliche Konstruktion notwendig ist, muß im Einzelfall entschieden werden und richtet sich im wesentlichen nach den gegebenen Verhältnissen, sowie nach den jeweiligen Richtlinien und gesetzlichen Auflagen.

Nach einer anderen Ausbildungsform der Erfindung ist vorgesehen, daß der Meiler mit über den Querschnitt verteilt angeordneten Kanälen ausgebildet ist, die für die Verbrennungsluftzufuhr dienen. Brennstoff wird allerdings durch die Kanäle nicht zugeführt. Vielmehr ist es in vorteilhafter Weise vorgesehen, daß auf der Grundfläche punktförmig, aber gleichmäßig verteilt Zündmaterial , vorzugsweise Koks, oberhalb und auf den Kanälen angeordnet ist. Bei einer derartigen Ausbildung des Meilers ist es in vorteilhafter Weise möglich, auf die Zuführung von Brennstoff zu verzichten. Vielmehr ist es lediglich nötig, den im Meiler angeordneten Koks anzuzünden, was über die Kanäle erfolgen kann. Dann wird der Koks durch gleichmäßige Zufuhr von Verbrennungsluft entzündet und führt dann zu einem gleichmäßigen und vorteilhaft sicheren Durchbrennen des Meilers. Der große Vorteil eines entsprechenden Meilers liegt darin, daß der Zündvorgang kurz und das Anbrennen des Meilers sehr schnell erfolgt, so daß die den Schwefel absorbierenden Schichten gleich von vornherein stark beaufschlagt werden, um so sicherer den gesamten Schwefel abzubinden, der von den Rauchgasen mitgebracht wird.

Zum Verbessern des gleichmäßigen Durchbrandes des Meilers ist es von Vorteil, wenn die unterste Schicht des Meilers aus einem grobkörnigen, nicht brennbaren Material, vorzugsweise Kies besteht und über die Grundfläche des Meilers durchgehend ausgebildet ist. Diese Schicht wirkt dann als flächige Verbrennungsluftzufuhrleitung , wobei die gesamte Fläche des Meilers kontinuierlich und gleichmäßig mit Verbrennungsluft versorgt wird , so daß der wirksame Brand im Meiler gewährleistet ist.

Nach einer weiteren zweckmäßigen Ausführungsform ist vorgesehen, daß mittig des Meilers ein Gaskanal ausgebildet ist, der mit grobkörnigem, nicht brennbarem Material bzw. im oberen Ende mit feinkörnigem Kalkstein ausgefüllt ist. Dieser Gaskanal fördert die "Durchlüftung" des Meilers und ermöglicht es, den größten Teil der Abgase gezielt im oberen Bereich dieses Gaskanals zu entschwefeln. Durch die Ausbildung des oberen Endes bzw. durch die Wahl eines entsprechenden Materials und dessen Körnung kann sowohl der Zug im Meiler bestimmt als auch der Entschwefelungsgrad eingestellt werden. Dies ist besonders vorteilhaft, weil die zum Einsatz kommenden Berge sowohl im Körnungsaufbau als auch im Schwefelgehalt unterschiedlich sind.

Die Entzündung des als Startenergie dienenden Kokses erfolgt einfach und sicher, da erfindungsgemäß die Kanäle unterhalb der untersten Schicht angeordnet und als U-förmige Zündrinne ausgebildet sind, deren Flankenenden ein Gitter tragen. Derartige Kanäle sind sehr stabil und können zum Einführen einer Zündlanze verwendet werden bzw. bringen die benötigte Verbrennungsluft nicht zur an einen Ort, sondern tragen dazu bei, daß diese Verbrennungsluft bereits auf dem Wege durch den Meiler den jeweiligen Abschnitten zuströmt, so daß der Zündvorgang schnell vonstatten geht und der Brand sich schnell über die Grundfläche verteilt.

Die Zufuhr an Verwendungsluft kann einfach reguliert werden, indem die Kanäle außerhalb des Meilers endseitig verschließbar und mit dem anderen Ende bis dicht an den Gaskanal heranreichend angeordnet sind.

Der Zündvorgang wird weiter dadurch abgesichert, daß der untere Bereich der Flanken des Meilers zusätzlich zur Abdeckung mit einer abdichtenden Schicht belegt ist. Diese rundumlaufend abdichtende Schicht sorgt dafür, daß der Brand auch wirklich bis an die äußeren Flanken herangeführt wird, bevor er langsam in Richtung Spitze des Meilers vordringt.

Die Erfindung zeichnet sich insbesondere dadurch aus, daß ein wirtschaftliches und umweltfreundliches Verfahren geschaffen ist, das einen praktisch kontinuierlichen Betrieb zur Herstellung von Bau- und Bauzuschlagstoffen aus Bergematerial des Steinkohlenbergbaus ermöglicht. Dabei ist die Umweltfreundlichkeit durch eine geeignete Abdeckung erreicht, die entweder von Hand durch Aufbringen einer entsprechend präparierten Schicht erzeugt oder durch einen gekühlten Stahlblechmantel oder ähnliches gebildet wird. Der Meiler selbst weist ein Innengerüst auf, das sowohl einen gleichmäßigen Brennprozeß sicherstellt. Durch eine besondere Ausbildung als Damm- oder Ringdammeiler ist eine Meilerart geschaffen, die einen kontinuierlichen Betrieb ermöglicht bzw. erleichtert. Vorteilhaft ist dabei, daß die Anzahl der notwendigen Aggregate zur Aufschichtung des Bergematerials wie auch zur anschließenden Aufarbeitung des gebrannten Materials wesentlich reduziert werden kann.

Weitere Einzelheiten und Vorteile des Erfindungsgegenstandes ergeben sich aus der nachfolgenden Beschreibung der zugehörigen Zeichnung, in der bevorzugte Ausführungsbeispiele mit den dazu notwendigen Einzelheiten und Einzelteilen dargestellt ist. Es zeigen:

Fig. 1    eine Seitenansicht eines Meilers,

Fig. 2    eine Draufsicht auf die Grundfläche eines Meilers,

Fig. 3    einen Längsschnitt durch einen Meiler,

Fig. 4    einen Längsschnitt durch einen Meiler gemäß Fig. 3 mit einem Innengerüst,

Fig. 5    Stahlblechtafeln in Draufsicht,

Fig. 6    einen schematisiert dargestellten Ringdammmeiler,

Fig. 7    Meiler im Querschnitt,

Fig. 8    Zündrinne in perspektivischer Darstellung und

Fig. 9    Meiler im Schnitt und Draufsicht gemäß Fig. 7 .

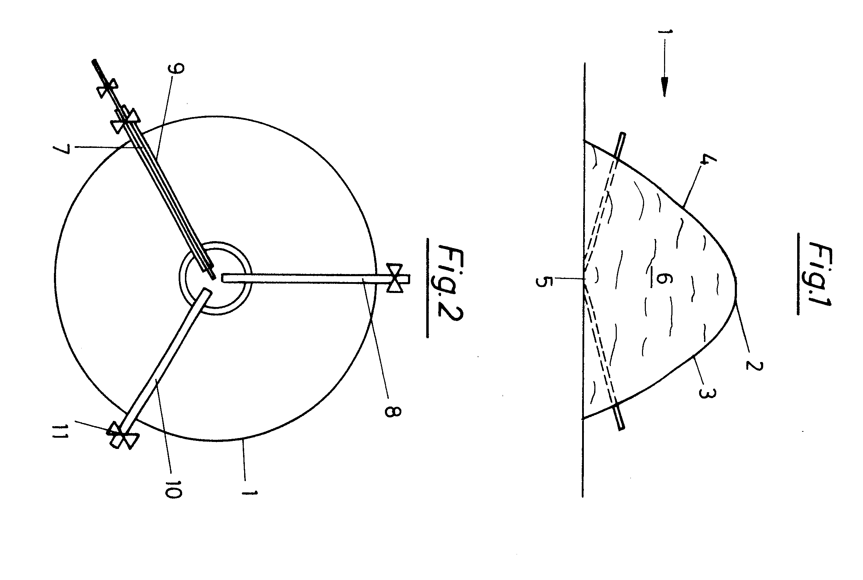

Fig. 1 zeigt einen Meiler in Seitenansicht, wobei im dargestellten Beispiel ein als Kegelstumpf ausgebildeter Meiler gezeigt ist. Im Bereich der Spitze 2 kann falls notwendig, ein Kaminaustritt vorgesehen sein. Die Flanken 3, 4 sind mit einer Neigung von rund 50° angelegt, wobei insbesondere bei Verwendung der später noch erläuterten Blechkonstruktionen auch größere Neigungen denkbar sind.

Im Bereich des Mittelpunktes 5 ist der Brenner angeordnet, d.h. also auch der Ausgangspunkt des Durchbrennverfahrens des gesamten im Meiler 1 angeordneten Bergematerials. Über die Abdeckung 6 wird dabei ein Austreten von schädlichen Gasen verhindert, wobei dies beispielsweise durch Niederschlagen oder Absorbierung der schädlichen Bestandteile in der Abdeckung 6 erreicht wird.

Wie in Fig. 2 verdeutlicht, sind von der Abdeckung 6 ausgehend zum Mittelpunkt 5 gerichtete Kanäle 8, 9, lo vorgesehen, durch die gleichzeitig auch die Brennstoffleitung 7 verläuft, die den mittig angeordneten Brenner mit dem nötigen Brennstoff versorgt. Die Kanäle 8, 9, lo sowie die Brennstoffleitung 7 weisen endseitig Ventile 11 auf, über die die Brennstoff- bzw. Verbrennungsluftzufuhr geregelt werden kann.

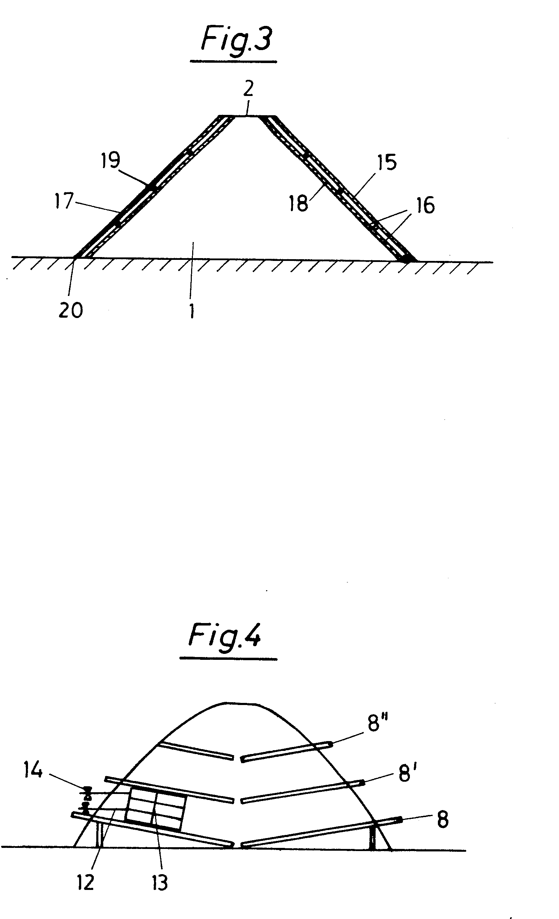

Wie aus Fig. 4 hervorgeht, können die Kanäle 8, 9, lo als in verschiedenen Ebenen angeordnete Kanäle 8, 8', 8'' angeordnet sein, wobei die Abstände über Abstandshalter vorgegeben sind. Als derartige Abstandshalter können Rohre 12, 13 dienen, die endseitig Ventile 14 aufweisen und zur Zufuhr von Kühlwasser oder Kühlluft dienen. Über diese Rohre 12, 13 kann der Brennprozeß gezielt beeinflußt werden, und zwar jeweils in genau vorgegebenen Bereichen, so daß ein immer gleichmäßiger Brand in dem gesamten Meiler 1 gesichert ist.

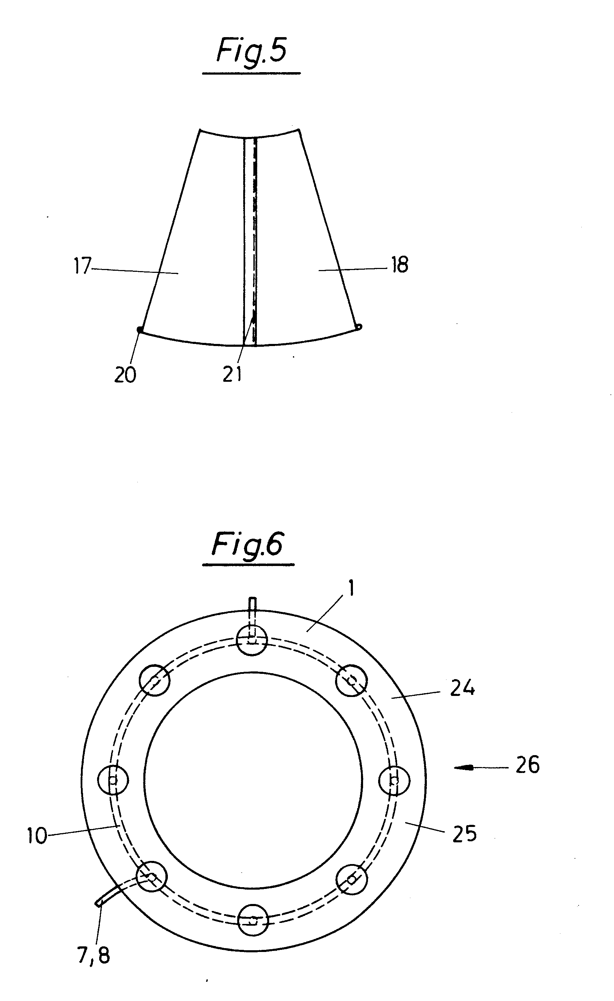

Fig. 3 zeigt einen Meiler, der statt der in Fig. 1 gezeigten Abdeckung 6 aus beispielsweise einem feinkörnigen Gemisch aus Waschbergen und CaO sowie ggf. Aktivkohle eine Blechkonstruktion 15 aufweist, über die die gewünschte Abdichtung des Meilers 1 erreicht wird. Eine derartige Blechkonstruktion besteht zweckmäßig aus einem Stahlblechmantel 16, der beispielsweise durch Kühlwasser kühlbar ist. Dieser Stahlblechmantel 16 besteht, wie Fig. 5 erläutert, aus einzelnen Stahlblechtafeln 17, 18 , wobei die Bleche über Stützen 19 im Abstand zueinander gehalten werden. Diese Stahlblechtafeln 17, 18 sind nach oben hin zulaufend ausgebildet und an den Längsseiten mit einer Überdeckung 21 versehen, so daß ein immer dichter Abschluß über die gesamte Oberfläche des Meilers 1 gewährleistet ist. An den Fußpunkten 2o sind Scharniere oder Halterungen vorge-

0110361

- 16 -

sehen, über die die einzelnen Stahlblechtafeln 17 bzw. 18 oder der Stahlblechmantel 16 in Sektoren klappbar sind. Dadurch kann nach dem erfolgten Löschen des gebrannten Bergematerials die Abdeckung 6 bzw. die Blechkonstruktion 15 leicht mechanisch entfernt werden. Der Stahlblechmantel 16 wird dann durch einen Kran zerlegt bzw. angehoben. Bei kleineren Meilern 1 ist es dabei denkbar, daß der Stahlblechmantel 16 auch als Einheit über einen Kran hochgezogen wird.

Fig. 6 zeigt vereinfacht dargestellt eine Anzahl von dicht bei dicht angeordneten Meilern 1, 24, 25. Diese Meiler bilden einen Rindamm 26, wobei die einzelnen Meiler durch einen ringförmig verlegten Kanal lo miteinander verbunden sind. Bei einem derart ausgebildeten Ringdamm können in vorteilhafter Weise Stahlblechtafeln verwendet werden, die um ihre Fußpunkte geklappt bzw. gedreht werden können. Diese Platten sind unterhalb der Meilerspitze oder des Meilergrates stumpf abgeschnitten, so daß sie in der Gesamtform entweder einen Pyramidenstumpf oder einen Dammkörper bilden. Oberhalb dieser Öffnungsbegrenzung wird der Meiler 1, 24, 25 mit gebrannten Fein- und Feinstbergen abgedeckt, die mit Kalksteinmehl im ein- bis zweifachen stöchiometrischen Verhältnis zum Schwefelgehalt sowie mit Aktivkohle versetzt sind.

Diese geringe Abdeckung 6 läßt sich nach Abschluß des Brennprozesses leicht mechanisch entfernen, während der Blechmantel ganz oder teilweise mit dem Kran gezogen wird. Das gebrannte Bergematerial wird nach dem Abklappen der Stahlblechtafeln 17, 18 durch Greifbagger oder Frontlader abgetragen, wobei das Innengerüst aus Kanälen 8, 9, lo und Rohren 12, 13 kontinuierlich mit demontiert wird, um dann anschließend wieder aufgestellt zu werden.

Das keramisierte Material wird dann zunächst in einer Siebanlage bei ca. 3o mm Korngröße abgesiebt. Der Siebdurchgang
wird in nachgeschalteten Absiebungen in die Kornstufen
o,5; 5 bis 15 und 15 bis 3o mm zerlegt. Der Siebüberlauf wird
je nach dem Verwendungszweck im Hoch- und Tiefbau weiterbehandelt, vorzugsweise bei 8o mm gebrochen und in einer
Prallmühle zu einem Kornband von o bis 45 mm zerkleinert.
Anschließend erfolgt die Zerlegung in Einzelfraktionen,
deren Abstufung dem Verwendungszweck angepaßt ist. Je nach
Notwendigkeit wird das gesamte Gut oder einzelne Fraktionen
sortiert, um es als dichtes oder poröses Material einem
besonders geeigneten Einsatzzweck zuführen zu können.

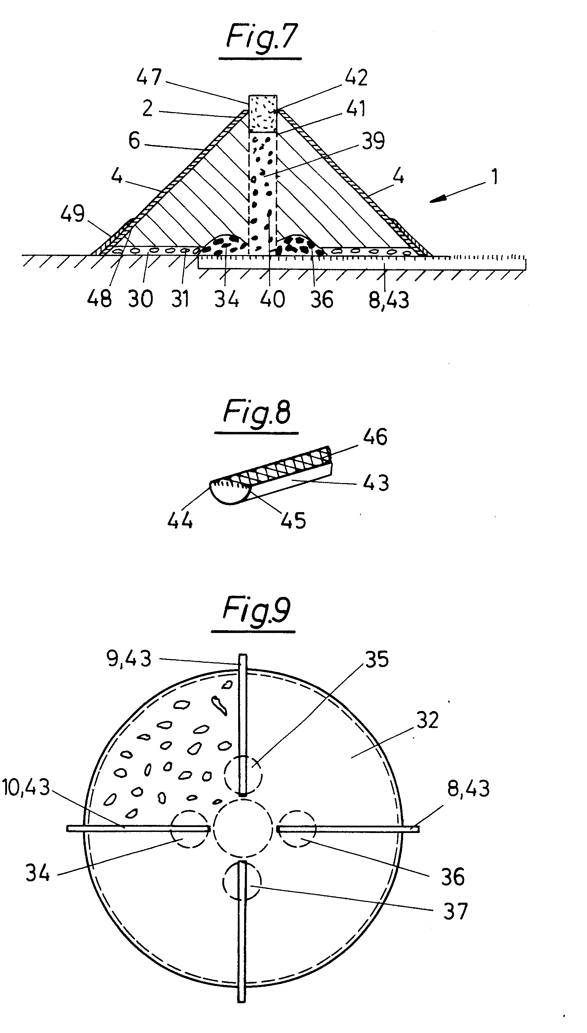

Eine andere Ausführungsform des Meilers 1 zeigt Fig. 7,
wobei hier der Einfachheit halber nur die unteren horizontalen Kanäle 8,9, lo dargestellt sind.

Der Meiler 1 zeigt an seinem Fuße eine unterste Schicht 3o,
aus grobkörnigem Kies 31 besteht und zu einer gleichmäßigen
Belüftung dieses Bereiches des Meilers beiträgt. Auf diese
Weise kann die gesamte Grundfläche 32 des Meilers 1 mit
Verbrennungsluft versorgt werden, so daß der gleichmäßige
Durchbrand gesichert ist.

Etwa mittig des Meilers 1 ist ein Gaskanal 39 gebildet, der
mit nicht brennbarem Material 4o ausgefüllt ist. Bei diesem
Material kann es sich wie bei der untersten Schicht um
Kies oder grobkörnigen Kalkstein handeln. Das obere Ende
41 dagegen ist mit feinkörnigem Kalkstein 42 ausgefüllt, um
hier ein sicheres Abbinden des Schwefels vor dem Austritt in
die Atmosphäre sicherzustellen. Mit dargestellt ist ein
Rohr 47, mit dessen Hilfe beim Aufschütten des Meilers 1
der Gaskanal 43 gebildet ist. Dieses Rohr 47 wird nämlich
gleichmäßig mit hochgezogen, so daß ein wirksamer und genau
definierter Gaskanal 39 geschaffen ist.

Etwa am Fuße des Gaskanals 39 ist Koks 34, 35, 36, 37 angehäuft, wie auch Fig. 9 verdeutlicht. Diese Kokshaufen liegen oberhalb der als Zündrinne 43 ausgebildeten Kanäle 8, 9, 1o. Diese Zündrinnen 43 sind wie Fig. 8 verdeutlicht, U-förmig ausgebildet, wobei die Flankenenden 44, 45 ein Gitter 46 tragen. Dadurch kann von dem aus dem Meiler 1 herausragenden Ende der Zündrinne 43 aus ein Brenner bzw. eine Brennlanze eingeführt werden, über die der Koks 34, 35, 36, 37 endzündet wird. Von dort aus wird dann der Brand gleichmäßig über die Grundfläche 32 und den gesamten Meiler 1 getragen. Dieser gleichmäßige Durchbrand wird weiter dadurch gesichert, daß der untere Bereich 48 der Flanken 3, 4 mit einer zusätzlichen abdichtenden Schicht 49 bedeckt ist. Auf diese Weise wird der Brand begünstigt durch die unterste Schicht 3o aus Kies 31 zunächst in den Randbereich des Meilers 1 gezogen , bevor er dann langsam nach oben weitergeht.

- 1 -

Patentansprüche:

1. Verfahren zur Herstellung eines Bau- und Bauzuschlagstoffes für den Hoch- und Tiefbau, insbesondere aus Bergematerial des Steinkohlenbergbaus, das zu einem Meiler
   aufgeschüttet und über einen gesondert erzeugten oder
   beim Aufschütten belassenen Kanal gezündet, belüftet,
   befeuert und bei 5oo bis 2000$^o$ C gebrannt wird, dadurch
   gekennzeichnet, daß das Bergematerial vergleichmäßigt,
   in definierter Menge zu einem Meiler geformt, mit einer
   den Austritt schwefelhaltiger Gase unterbindenden Abdeckung versehen und bei 9oo bis 11oo, vorzugsweise
   95o$^o$ C gebrannt wird.

2. Verfahren nach Anspruch 1, dadurch gekennzeichnet, daß
   nach Durchbrennen des Meilergutes bis an die Abdeckung
   die Temperatur bei 9oo bis 11oo$^o$ C für drei bis sechs
   Stunden eingehalten wird.

3. Verfahren nach Anspruch 1, dadurch gekennzeichnet, daß
   das Bergematerial klassiert und der Siebdurchgang von
   o bis 55 (6o) mm nach einer Mischlagermethode zu einem
   Meiler geformt und gebrannt wird.

4. Verfahren nach Anspruch 1 und Anspruch 2, dadurch gekennzeichnet, daß während ein Meiler gebrannt wird, ein
   zweiter ausgebrannter aufgearbeitet und ein dritter neu
   aufgeschichtet wird.

5. Verfahren nach Anspruch 1, dadurch gekennzeichnet, daß
   das gebrannte Bergematerial klassiert und sortiert wird.

6. Verfahren nach Anspruch 1, dadurch gekennzeichnet, daß
   das Bergematerial in definierter Menge und bezüglich Heizwert, Schwefelgehalt, Korngrößenverteilung und Brennverhalten definierter Qualität insbesondere mit einem Heizwert von 65o bis 12oo kcal, vorzugsweise 8oo kcal vorbereitet und zu einem Meiler geformt und gebrannt wird.

7. Verfahren nach Anspruch 1, Anspruch 2, Anspruch und Anspruch 6, dadurch gekennzeichnet, daß als Abdeckung ein Gemisch aus erdfeuchten Fein- bzw. Feinstbergen und (ungebranntem) Kalksteinmehl auf den Meiler in einer Schichtstärke von 2o bis 3o cm aufgebracht wird, wobei das stöchiometrische Verhältnis gleich oder größer dem einzubindenden Schwefel ist.

8. Verfahren nach Anspruch 1, Anspruch 2, Anspruch 3 und Anspruch 6, dadurch gekennzeichnet, daß der Meiler mit einer mit Kalksteinmehl versetzten erdfeuchten Schicht aus keramisierten Bergen im Fein- und Feinstkornbereich abgedeckt wird.

9. Verfahren nach Anspruch 7 und Anspruch 8, dadurch gekennzeichnet, daß zur Unterstützung der Schwefeleinbindung ein Reagenz wie Lux-Masse zugegeben wird.

1o. Verfahren nach Anspruch 1, Anspruch 2, Anspruch 3 und Anspruch 6 bis Anspruch 8, dadurch gekennzeichnet, daß der Meiler mit einer mit Kalksteinmehl und Aktivkohle angereicherten Schicht abgedeckt wird.

11. Verfahren nach Anspruch 1, dadurch gekennzeichnet, daß der Meiler auf einer Schicht von grobkörnigem, nicht brennbarem Material errichtet wird.

12. Verfahren nach Anspruch 1, dadurch gekennzeichnet, daß mittig des Meilers mit diesem gleichzeitig ein mit grobkörnigem, nicht brennbarem Material ausgefüllter Gaskanal durch Mithochziehen eines bodenlosen Fasses oder eines Rohres gebildet wird.

0110361

- 3 -

13. Verfahren nach Anspruch 1 und Anspruch 12, dadurch gekennzeichnet, daß der Zündstoff, vorzugsweise grobstückiger Koks am Fuß des Gaskanals aufgeschüttet wird.

14. Meiler mit über den Querschnitt verteilt angeordneten Kanälen für die Brennstoff- und Verbrennungsluftzufuhr und mit dem Brenner zur Durchführung des Verfahrens nach den Ansprüchen 1 bis 13, dadurch gekennzeichnet, daß die Kanäle (8, 9, 1o) vom Mittelpunkt (5) der Grundfläche des Meilers (1) mit einer Steigung von 5 bis 15 %, vorzugsweise 1o % verlegt und durch die Abdeckung (6) hindurchgeführt sind.

15. Meiler nach Anspruch 14, dadurch gekennzeichnet, daß die verschließbar ausgebildeten Kanäle (8, 9, 1o) in mehreren Ebenen verlaufend angeordnet sind.

16. Meiler nach Anspruch 14 und Anspruch 15, dadurch gekennzeichnet, daß zusätzlich zu den Kanälen (8, 9, 1o) unabhängig davon verlegte Rohre (12, 13) oder Rohrschlangen vorgesehen und mit einer Wasser- oder Luftförderpumpe zu verbinden sind.

17. Meiler nach Anspruch 16, dadurch gekennzeichnet, daß die Rohre (12, 13) oder Rohrschlangen die einzelnen Kanäle (8, 9, 1o) in den Ebenen abstützend angeordnet sind.

18. Meiler nach Anspruch 14, dadurch gekennzeichnet, daß die Flanken (3, 4) über eine kühlbare, die Spitze (2) des Meilers (1) freilassende Blechkonstruktion (15) begrenzt und abgestützt sind.

19. Meiler nach Anspruch 18, dadurch gekennzeichnet, daß als Blechkonstruktion (15) ein sich nach oben kegel- oder bienenkorbartig verjüngender Stahlblechmantel (16) dient.

0110361

- 4 -

2o. Meiler nach Anspruch 19, _dadurch gekennzeichnet_, daß der Stahlblechmantel (16) mehrere Stahlblechtafeln (17, 18) aufweist, die um ihre Fußpunkte (2o) klappbar ausgebildet sind.

21. Meiler nach Anspruch 14, _dadurch gekennzeichnet_, daß der Stahlmantel (16), dessen Standfläche offen ist, rohrförmig und am oberen Ende einen nach oben enger werdenden Stahlblechkegel aufweisend ausgebildet ist.

22. Meiler nach Anspruch 14, _dadurch gekennzeichnet_, daß mehrere Meiler (1, 24, 25) dicht an dicht zu einem Damm zusammengefügt und über gemeinsame Kanäle (1o) verbunden und seriell beschickbar sind.

23. Meiler nach Anspruch 14, _dadurch gekennzeichnet_, daß mehrere Meiler (1, 24, 25) in Form eines Ringdammes (26) zusammengefügt sind.

24. Meiler nach Anspruch 14, _dadurch gekennzeichnet_, daß der Boden des Meilers (1) ganz oder abschnittsweise mit einem Schienenrost ausgerüstet ist, der bis zur Schienenoberkante mit einer Koksschicht belegt ist.

25. Meiler nach Anspruch 14, _dadurch gekennzeichnet_, daß die Spitze des Meilers (1) kappenartig ausgebildet ist und aus einem Material mit größerer Permeabilität besteht als das übrige Abdeckmaterial des Meilers.

26. Meiler nach Anspruch 14, _dadurch gekennzeichnet_, daß von der Spitze des Meilers (1) bis zum Boden ein mit Kalksteinsand oder Kalksteingries o.ä. Material gefüllter Abgasbereich ausgebildet ist.

27. Meiler nach Anspruch 14, Anspruch 25 oder Anspruch 26, dadurch gekennzeichnet, daß dem Kalksteinsand oder Kalksteingries zusätzlich Aktivkohle zugemischt ist.

28. Meiler nach Anspruch 14, dadurch gekennzeichnet, daß eine mit Teflon beschichtete Folie den gesamten Meiler (1) in Zeltform luftdicht umgebend vorgesehen ist, wobei die Folie unmittelbar auf dem Meilergut aufliegend angeordnet, an der Spitze zu einer Leitung zusammengefaßt und über eine Saugleitung mit einer Rauchgasentschwefelungsanlage verbunden ist.

29. Meiler nach Anspruch 14, dadurch gekennzeichnet, daß der oder die Meiler (1, 24, 25) in einer den gesamten Arbeitsbereich überspannenden rauchgasdichten Halle oder unter einem Zeltdach angeordnet sind.

3o. Meiler mit über den Querschnitt verteilt angeordneten Kanälen für die Verbrennungsluftzufuhr und die Zündung zur Durchführung des Verfahrens nach den Ansprüchen 1 bis 13, dadurch gekennzeichnet, daß auf der Grundfläche (32) punktförmig, aber gleichmäßig verteilt Zündmaterial, vorzugsweise Koks (34, 35, 36, 37) oberhalb und auf den Kanälen (8, 9, 1o) angeordnet ist.

31. Meiler nach Anspruch 3o, dadurch gekennzeichnet, daß die unterste Schicht (3o) des Meilers (1) aus einem grobkörnigen, nicht brennbaren Material (31) vorzugsweise Kies über die Grundfläche (32) des Meilers durchgehend ausgebildet ist.

32. Meiler nach Anspruch 3o, dadurch gekennzeichnet, daß mittig des Meilers (1) ein Gaskanal (39) ausgebildet ist, der mit grobkörnigem, nicht brennbarem Material (4o) bzw. im oberen Ende (41) mit feinkörnigem Kalkstein (42) ausgefüllt ist.

33. Meiler nach Anspruch 3o und Anspruch 31, dadurch gekennzeichnet, daß die Kanäle (8, 9, 1o) unterhalb der untersten Schicht (3o) angeordnet und als U-förmige Zündrinne (43) ausgebildet sind, deren Flankenenden (44, 45) ein Gitter (46) tragen.

34. Meiler nach Anspruch 33, dadurch gekennzeichnet, daß die Kanäle (8, 9, 1o) außerhalb des Meilers (1) endseitig verschließbar und mit dem anderen Ende bis an den Gaskanal (39) heranreichend angeordnet sind.

35. Meiler nach Anspruch 3o, dadurch gekennzeichnet, daß der untere Bereich (48) der Flanken (3, 4) des Meilers (1) zusätzlich zur Abdeckung (6) mit einer abdichtenden Schicht (49) belegt ist.

Fig.1

Fig.2

*Fig.3*

*Fig.4*

## Fig.5

17    18

20    21

## Fig.6

1

24

26

25

10

7,8

## Fig.7

## Fig.8

## Fig.9